# EUROPEAN PATENT APPLICATION

(11) **EP 4 249 942 A1**
(43) Date of publication of application: **27.09.2023**
(21) Application number: 22163819.0
(22) Date of filing: 23.03.2022
(51) Int. Cl.: G01S 7/40, G01S 13/931

(54) **ALIGNMENT DETECTION FOR A VEHICLE RADAR TRANSCEIVER**

(71) Applicant: Veoneer Sweden AB, 447 37 Vårgårda (SE)
(72) Inventor: MOSS, Jonathan, 85716 Unterschleissheim (DE)
(74) Representative: Westpatent AB

(57) **Abstract**

The present disclosure relates to a measuring system (12) for determining the alignment, defined by means of a pitch angle (ϕₚ) a yaw angle (ϕ_{y}) and a roll angle (ϕᵣ), of a vehicle radar transceiver (3). The measuring system (12) comprises a radar system (2) that in turn comprises the radar transceiver (3) and a control unit (4). The measuring system (12) further comprises at least a first target object (7a) positioned at a first azimuth angle/elevation angle (α₁, Φ_{A}), and a second target object (7b) positioned at a second azimuth/elevation angle (α₂, (Φ_{B}) relative a corresponding reference line (L, L'). The measuring system (12) is adapted to:
- transmit radar signals (5);
- receive reflected radar signals (6) from the target objects (7a, 7b);
- determine a first and second measured azimuth angles (β₁, β₂) and elevation angles (θ_{A}, θ_{B}) to a first and second measured target object (7'a, 7'b), and
- estimate pitch angle (ϕₚ), yaw angle (ϕ_{y}) and roll angle (ϕᵣ) of the radar transceiver (3) with respect to a fixed coordinate system (x, y, z) based on the measured angles (β₁,β₁; θ_{A}, θ_{B}) and the corresponding position angles (α₁, α₂; (Φ_{A}, Φ_{β}).

## Description

The present disclosure relates to determining the alignment of a vehicle radar transceiver, the alignment being defined by means of a pitch angle, a yaw angle and a roll angle, of the radar transceiver with respect to a fixed coordinate system,

Today, one or more radar transceivers may be mounted on a vehicle in order to detect reflections from surrounding objects in order to implement safety functions such as collision prevention as well as automated/assisted driving. In such a radar transceiver it is required to obtain an azimuth angle in the form of a target bearing angle, a distance with respect to the object, and a relative speed between the vehicle and the object. It is sometimes also necessary to report the elevation angle to the target.

For most vehicle radar applications it is important to measure the azimuth angle with a relatively high degree of precision. The angle accuracy of a radar system depends on fundamental parameters like number of receive channels, component tolerances, assembly precision and installation conditions.

Radar transceivers can furthermore be affected by various vehicle components such as different types of bumpers and vehicle front and rear section geometries. Radar transceivers are also affected by variations during manufacturing and assembly. Sensor systems therefore require calibration to produce accurate sensor output signals. This calibration is often performed during manufacture in a factory, which is time-consuming and drives cost. Optimal calibration parameters may also change over time, which necessitates a re-calibration, which may be inconvenient. It is an object of the present disclosure to present an alternative and less complicated method and system for detecting alignment and possible misalignment of a radar transceiver.

Said object is achieved by means of a measuring system for determining the alignment of a vehicle radar transceiver, where the alignment is defined by means of a pitch angle, a yaw angle and a roll angle of the radar transceiver with respect to a fixed coordinate system. The measuring system comprises a radar system that in turn comprises the radar transceiver and a control unit. The measuring system further comprises at least a first target object positioned at a first azimuth angle and a first elevation angle relative a corresponding reference line, and a second target object positioned at a second azimuth angle and a second elevation angle relative the corresponding reference line. The measuring system is adapted to transmit radar signals, receive reflected radar signals that have been reflected by the target objects, and to determine a first measured azimuth angle and a first measured elevation angle to a first measured target object, corresponding to the first target object, relative the corresponding reference line.

The measuring system is further adapted to determine a second measured azimuth angle and a second measured elevation angle to a second measured target object, corresponding to the second target object the corresponding reference line. The measuring system is also adapted to estimate the pitch angle, the yaw angle and the roll angle of the radar transceiver with respect to a fixed coordinate system based on the measured angles and the corresponding position angles.

This means that the alignment and possible misalignment of a radar transceiver can be detected in a less complicated manner than previously known. In particular, when the radar transceiver is not accessible to the person performing an alignment test.

According to some aspects, the measuring system is adapted to determine expected azimuth angles for a set of different combinations of pitch angles, yaw angles and roll angles, for example using the well-known 3-dimensional rotation matrices and to determine which combinations of pitch angle, yaw angle and roll angle that correspond to expected azimuth angles that are closest to the measured azimuth angles.

According to some aspects, the measuring system is adapted to create a table of the measured angles and the corresponding position angles, and to use maximum likelihood estimation for estimating the pitch angle, the yaw angle and the roll angle using the table.

This way, it is possible to determine the most likely mechanical misalignment that could lead to such a measurement.

According to some aspects, the measuring system is adapted to compare the pitch angle, the yaw angle and the roll angle to previously defined thresholds.

According to some aspects, the measuring system is adapted to compare a combination of the pitch angle, the yaw angle and the roll angle to a previously defined threshold.

This way, it is possible to determine the most likely mechanical misalignment that could lead to such a measurement in the most suitable manner.

According to some aspects, the target objects are positioned at different vertical positions relative a ground level, where the first target object is positioned at a first elevation angle relative a reference line and the second target object is positioned at a second elevation angle relative the reference line.

This way, different elevation angles can be used, which increases the versatility of the measuring system.

According to some aspects, at least one target object is a longitudinal reflector in the form of a circular pole or a 90° bent longitudinally running metal sheet.

This means that many kind of radar reflectors can be used, and even be easily manufactured.

This object is also achieved by means of methods that are associated with the above advantages.

### BRIEF DESCRIPTION OF THE DRAWINGS

The present disclosure will now be described more in detail with reference to the appended drawings, where:
- Figure 1: shows a schematic top view of a vehicle and a measuring system;
- Figure 2A: shows a schematic top view of a radar transceiver and target objects;
- Figure 2B: shows a schematic side view of a radar transceiver and target objects;
- Figure 3: shows a schematic perspective view of the radar transceiver in a coordinate system;
- Figure 4: shows a schematic first view of the radar transceiver in the coordinate system;
- Figure 5: shows a schematic second view of the radar transceiver in the coordinate system;
- Figure 6: shows a schematic third view of the radar transceiver in the coordinate system;
- Figure 7: schematically illustrates a control unit;
- Figure 8: shows an example computer program product; and
- Figure 9: shows a flowchart for methods according to the present disclosure;
- Figure 10A: shows an example of a pole used as a radar reflector; and
- Figure 10B: shows an example of a folded metal sheet used as a radar reflector.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the disclosure. As used herein, the singular forms "a", "an" and "the" are intended to include the plural forms as well, unless the context clearly indicates otherwise.

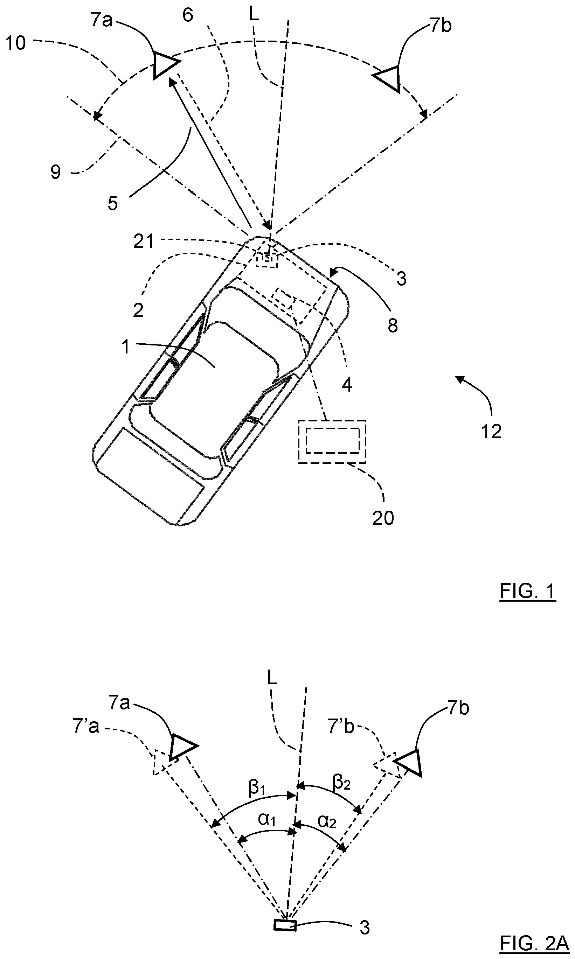

Figure 1 shows a top view of a vehicle 1 that comprises a radar system 2 that in turn comprises a vehicle radar transceiver 3 and a control unit 4. The radar transceiver 3 has a certain field of view (FOV) 9 and a front side 11 comprising a radar aperture.

The radar transceiver 3 is adapted to transmit radar signals 5 and receive reflected radar signals 6 that have been reflected by a target object 7a. The control unit 4 controls the radar transceiver 3, for example transmission timing, transmission frequency content, as well as the actual transmitted time waveform. The control unit 4 is also adapted to perform signal processing in order to extract target data related to the detected target objects, for example 2D FFT for obtaining a Range-Doppler matrix in a previously well-known manner. According to some aspects, the control unit 4 is connected to an external computer device 20.

According to some aspects, the radar transceiver 3 is positioned behind or inside a bumper 8 which serves as a radome for the radar transceiver 3.

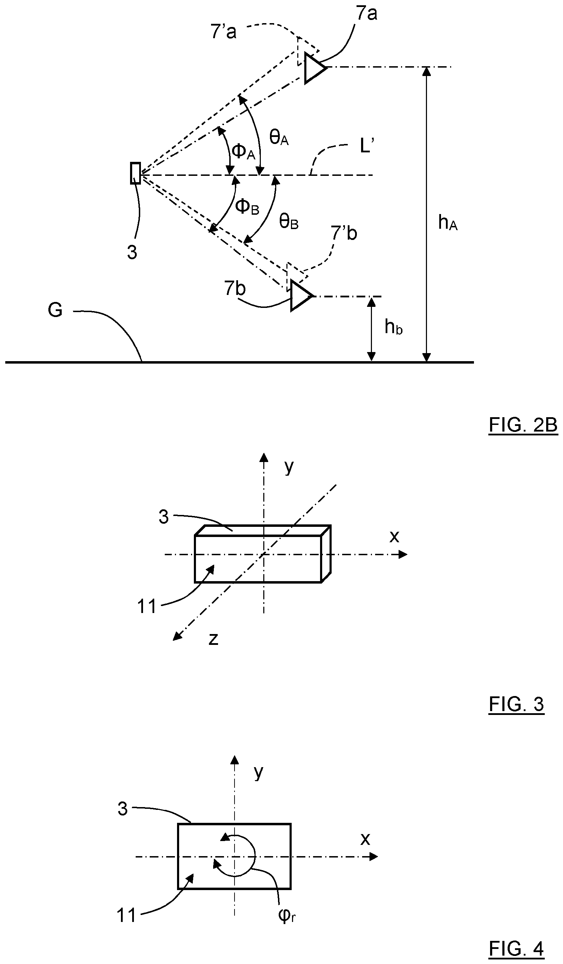

Figure 1 further shows a measuring system 12 for determining the alignment of the vehicle radar transceiver 3, where the alignment is defined by means of a pitch angle ϕₚ, a yaw angle ϕ_{y} and a roll angle ϕᵣ of the radar transceiver 3 with respect to a fixed coordinate system x, y, z as shown in Figure 3-6. Figure 3 shows a schematic perspective view of the radar transceiver 3 in a coordinate system x, y, z, and Figure 4 - Figure 6 show a schematic views of the radar transceiver 3 with its front side 11 in the coordinate system x, y, z, illustrating the pitch angle ϕₚ, the yaw angle ϕ_{y} and the roll angle ϕᵣ of the radar transceiver 3.

With reference also to Figure 2A and Figure 2B, the measuring system 12 comprises the radar system 2 and at least a first target object 7a positioned at a first azimuth angle α₁ and a first elevation angle Φ_{A} relative a corresponding reference line L, L', and a second target object 7b positioned at a second azimuth angle α₂ and a second elevation angle Φ_{B} relative the corresponding reference line L, L'. The measuring system 12 thus comprises at least two target objects 7a, 7b, and this example is described for two target objects 7a, 7b. The measuring system 12 is adapted to transmit radar signals 5 and to receive reflected radar signals 6 that have been reflected by the target objects 7a, 7b, and to determine a first measured azimuth angle β₁ and a first measured elevation angle θ_{A} to a first measured target object 7'a, corresponding to the first target object 7a, relative the corresponding reference line L, L'.

The measuring system 12 is further adapted to determine a second measured azimuth angle β₂ and a second measured elevation angle θ_{B} to a second measured target object 7'b, corresponding to the second target object 7b relative the corresponding reference line L, L', and to estimate the pitch angle ϕₚ, the yaw angle ϕ_{y} and the roll angle ϕᵣ of the radar transceiver 3 with respect to a fixed coordinate system x, y, z based on the measured angles β₁,β₁; θ_{A}, θ_{B} and the corresponding position angles α₁, α₂; Φ_{A}, Φ_{B}.

In this manner, the alignment and possible misalignment of a radar transceiver can be detected in a less complicated manner than previously known.

The estimation of the pitch angle ϕₚ, the yaw angle ϕ_{y} and the roll angle ϕᵣ can be performed in many different ways, and a number of examples will be provided in the following.

According to some aspects, the measuring system 12 is adapted to determine expected azimuth angles for a set of different combinations of pitch angles ϕₚ, yaw angles ϕ_{y} and roll angles ϕᵣ. This could be performed using the well-known 3-dimensional rotational matrix multiplication. The measuring system 12 is further adapted to determine which combinations of pitch angle ϕₚ, yaw angle ϕ_{y} and roll angle ϕᵣ that correspond to expected azimuth angles that are closest to the measured azimuth angles β₁, β₂.

According to some aspects, the measuring system 12 is adapted to create a table of the measured angles β₁, β₁; θ_{A}, θ_{B} and the corresponding position angles α₁, α₂; Φ_{A}, Φ_{B}, and use maximum likelihood estimation for estimating the pitch angle ϕₚ, the yaw angle ϕ_{y} and the roll angle ϕᵣ using the table.

According to some aspects, as an example, at a final stage of a vehicle assembly two corner targets may be used and can be at different ranges to the radar transceiver 3 and are positioned at zero degrees elevation to the radar and at a first azimuth angle α₁= +45° and a second azimuth angle α₂=-45°.

If the radar transceiver 3 is perfectly aligned to the vehicle 1, the measured angle pairs β₁, θ_{A}; β₂, θ_{B} would be +45°,0° and -45°,0°. If the radar transceiver 3 is not perfectly aligned to the vehicle 1, the measured angle pairs β₁, θ_{A}; β₂, θ_{B}, an example can be that these are measured as +44°,+3° and -46°,-3°. The radar transceiver 3 is not perfectly aligned, but may be within a mechanical alignment specification. By creating a table of all possible misalignment angles, e.g. (-3,-3,-3), (-3,-3,-2), etc., and the corresponding expected measured angles β₁, θ_{A}; β₂, θ_{B}, one can determine what is the most likely mechanical misalignment that could lead to such a measurement.

Other alternative approaches may be used to determine the most likely values of roll, pitch and yaw of the radar transceiver 3, noting that it may not be possible to find an exact match, while a sufficiently good match is obtainable.

According to some aspects, measuring system 12 is adapted to compare the pitch angle ϕₚ, the yaw angle ϕ_{y} and the roll angle ϕᵣ to previously defined thresholds.

According to some aspects, as an uncomplicated example, the alignment tolerance could be +/-3° in roll, +/-4° in pitch and +/-4° in yaw. After determining the most likely mechanical misalignment based on the two measurement pairs, the measuring system 12 could determine whether or not it is within those boundaries.

According to some aspects, the alignment angles can be combined in sets before determining if they are outside an agreed specification threshold. E.g., as an explanatory example, roll/pitch/yaw angles of 5°/0°/0° and 3°/3°/3° can be determined to be OK, while 5°/3°/0° can be determined not to be OK.

This means that the measuring system 12 is adapted to compare a combination of the pitch angle ϕₚ, the yaw angle ϕ_{y} and the roll angle ϕᵣ to a previously defined threshold.

It is desirable for the mounting tolerances to be as relaxed as possible, whereas it is important that the radar transceiver 3 performs sufficiently well in order to perform the desired functions in the associated desired angles. Hence in a more advanced example, a misalignment tolerance may be defined as an equation relating the three parameters. This could be particularly useful if the direction where the performance must be optimized is for example at +45° relative to the radar transceiver 3 boresight. In such cases, a positive pitch would degrade the performance, whereas a combination of positive pitch and negative roll could still have a sufficiently good performance.

Examples of such mathematical formulae could be pitch + roll + 2*yaw <= 4° or |pitch|+|roll|+2*|yaw| <= 4° where ∥ represents the magnitude. There may be multiple mathematical formulae that define a pass criteria, or the mathematical formulae may be conditional on an absolute threshold for each of the three angles individually.

In this manner, the alignment and possible misalignment of a radar transceiver can be detected in a less complicated manner than previously known.

According to some aspects, the target objects 7a, 7b are positioned at different vertical positions hₐ, h_{b} relative a ground level G, resulting in different measured elevation angles for the target objects relative a reference line, each measured elevation angle. Here, the first target object 7a is positioned at a first elevation angle Φ_{A} relative a reference line L' and the second target object 7a is positioned at a second elevation angle Φ_{B} relative the reference line L' .

According to some aspects, the measuring system 12 is adapted to determine a first measured elevation angle θ_{A} to the first measured target object 7'a relative the reference line L' and to determine a second measured elevation angle θ_{B} to the second measured target object 7'b relative the reference line L'. The measuring system 12 is further adapted to determine expected elevation angles for a set of different combinations of pitch angles ϕₚ, yaw angles ϕ_{y} and roll angles ϕᵣ, and to determine which combinations of pitch angle ϕₚ, yaw angle ϕ_{y} and roll angle ϕᵣ that correspond to expected elevation angles that are closest to the measured elevation angles θ_{A}, θ_{B}.

This means that the target objects can be separated in elevation as well, and that this separation can be used when determining the pitch angle ϕₚ, yaw angle ϕ_{y} and roll angle ϕᵣ of the radar transceiver 3.

According to some aspects, at least one target object 7a, 7b is a point reflector, for example in the form of a corner reflector as exemplified in Figures 1, 2A and 2B.

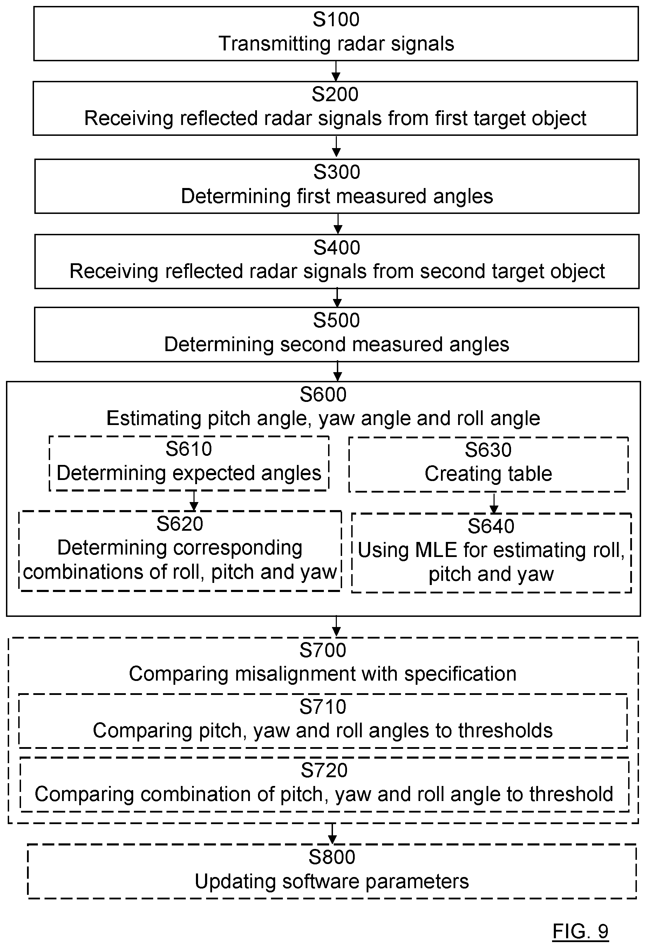

With reference to Figure 9, the present disclosure relates to a method for determining the alignment of a vehicle radar transceiver 3, the alignment being defined by means of a pitch angle ϕₚ, a yaw angle ϕ_{y} and a roll angle ϕᵣ of the radar transceiver 3 with respect to a fixed coordinate system x, y, z. The method comprises transmitting S100 radar signals 5, receiving S200 reflected radar signals 6 that have been reflected by a first target object 7a positioned at a first azimuth angle α₁ and a first elevation angle Φ_{A} relative a corresponding reference line L, L', and determining S300 a first measured azimuth angle β₁ and a first measured elevation angle θ_{A} to a first measured target object 7'a, corresponding to the first target object 7a, relative the corresponding reference line L, L'. The method further comprises receiving S400 reflected radar signals 6 that have been reflected by a second target object 7b positioned at a second azimuth angle α₂ and a second elevation angle Φ_{B} relative the corresponding reference line L, L', the first azimuth angle α₁ and the second azimuth angle α₂ being mutually different, and determining S500 a second measured azimuth angle β₂ and a second measured elevation angle θ_{B} to a second measured target object 7'b, corresponding to the second target object 7b, relative the corresponding reference line L, L'. The method also comprises estimating S600 the pitch angle ϕₚ, the yaw angle ϕ_{y} and the roll angle ϕᵣ of the radar transceiver 3 with respect to a fixed coordinate system x, y, z based on the measured angles β₁,β₁; θ_{A}, θ_{B} and the corresponding position angles α₁, α₂; Φ_{A}, Φ_{B}.

According to some aspects, the estimating S600 comprises determining S610 expected pairs of azimuth angles and elevation angles for a set of different combinations of pitch angles ϕₚ, yaw angles ϕ_{y} and roll angles ϕᵣ, and determining S620 which combinations of pitch angles ϕₚ, yaw angles ϕ_{y} and roll angles ϕᵣ that correspond to expected pairs of azimuth angles and elevation angles that are closest to the measured pairs of azimuth angles β₁, β₂ and elevation angles θ_{A}, θ_{B}.

According to some aspects, the estimating S600 comprises creating 630 a table of the measured angles β₁,β₁; θ_{A}, θ_{B} and the corresponding position angles α₁, α₂; Φ_{A}, Φ_{B}; and using 640 maximum likelihood estimation for estimating the pitch angle ϕₚ, the yaw angle ϕ_{y} and the roll angle ϕᵣ using the table.

According to some aspects, the target objects 7a, 7b are positioned at different vertical positions hₐ, h_{b} relative a ground level G, where the first elevation angle Φ_{A} and the second elevation angle Φ_{B} are mutually different.

According to some aspects, the method comprises comparing S700 the determined alignment of the radar transceiver 3, as defined by resulting determined pitch angle ϕₚ, yaw angle ϕ_{y} and roll angle ϕᵣ, to a specification.

According to some aspects, the comparing S700 comprises comparing 710 the pitch angle ϕₚ, the yaw angle ϕ_{y} and the roll angle ϕᵣ to previously defined thresholds.

According to some aspects, the comparing S700 comprises comparing 720 a combination of the pitch angle ϕₚ, the yaw angle ϕ_{y} and the roll angle ϕᵣ to a previously defined threshold.

According to some further aspects, the method comprises updating S800 software parameters of the radar transceiver 3 to correct for a determined misalignment.

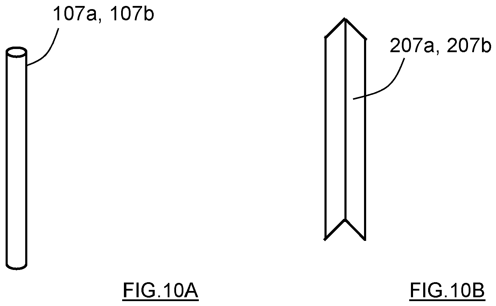

According to some further aspects, with reference to Figure 10A and Figure 10B, at least one target object is a longitudinal reflector in the form of a circular pole 107a, 107b or a 90° bent longitudinally running metal sheet 207a, 207b.

This means that a suitable radar reflector easily can be made available.

The present disclosure is aimed at using at least two target objects 7a, 7b that are positioned at different azimuth angles, according to some aspects -20° azimuth for the first target object 7a and +40° azimuth for the second target object 7b. The elevation angle may be the same for the target objects 7a, 7b and may be 0°. The elevation angles may alternatively be different for the target objects 7a, 7b.

The target objects 7a, 7b can according to some aspects be static and be at different ranges such that they can easily be separated by the radar.

As described more in detail below, a control unit and a computer program can according to some aspects be used to determine the most likely misalignment values of pitch angle ϕₚ, yaw angle ϕ_{y} and roll angle ϕᵣ. The computer program may also give an indication of the accuracy with which it is able to predict the value. Since there are four inputs and three outputs, the computer program may also indicate the consistency of the input values.

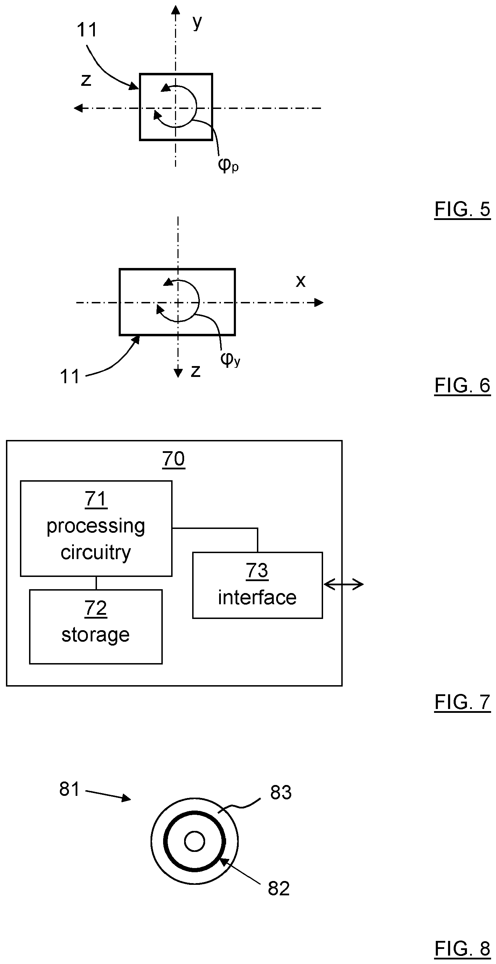

Figure 7 schematically illustrates, in terms of a number of functional units, the components of a control unit 70, corresponding to the control unit 4 described, according to an embodiment. Processing circuitry 71 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 72. The processing circuitry 71 may further be provided as at least one application specific integrated circuit (ASIC), or field programmable gate array (FPGA).

Particularly, the processing circuitry 71 is configured to cause the control unit 70 to perform a set of operations, or steps. These operations, or steps, were discussed above in connection to the various measuring systems 12 and methods. For example, the storage medium 72 may store the set of operations, and the processing circuitry 71 may be configured to retrieve the set of operations from the storage medium 72 to cause the control unit 70 to perform the set of operations. The set of operations may be provided as a set of executable instructions. Thus, the processing circuitry 71 is thereby arranged to execute methods and operations as herein disclosed.

The storage medium 72 may also comprise persistent storage, which, for example, can be any single one or combination of magnetic memory, optical memory, solid state memory or even remotely mounted memory.

The control unit 70 may further comprise a communications interface 73 for communications with at least one other unit. As such, the radar interface 73 may comprise one or more transmitters and receivers, comprising analogue and digital components and a suitable number of ports for wired or wireless communication.

The processing circuitry 71 is adapted to control the general operation of the control unit 70 e.g. by sending data and control signals to the external unit and the storage medium 72, by receiving data and reports from the external unit, and by retrieving data and instructions from the storage medium 72. Other components, as well as the related functionality, of the control unit 70 are omitted in order not to obscure the concepts presented herein.

Figure 8 shows a computer program product 81 comprising computer executable instructions 82 arranged on a computer readable medium 83 to execute any of the methods disclosed herein.

The present disclosure is not limited to the examples discussed, but may vary freely within the scope of the appended claims. For example, the radar transceivers can be of any suitable kind, and can according to some aspects comprise suitable devices such as antennas, transmitters, receivers, control units etc.

The control unit 4 may be constituted by one unit or by two or more distributed sub-units. The control unit 4 can according to some aspects be adapted to perform one or more of the steps described to be performed by the measuring system 12.

The present disclosure can be applied to any suitable radar transceiver or radar transceivers comprised in the radar system 2.

The present disclosure is especially useful in the cases where the radar transceiver 3 is not accessible to the person performing an alignment test, e.g. to put a tilt meter on it. Hence the person performing an alignment test requires a way to know that the radar transceiver 3 is aligned on the vehicle within the tolerance agreed by the radar manufacturer, which is provided by means of the present disclosure.

If the radar transceiver 3 is outside the mounting tolerance, its performance will be reduced, e.g. since the transmitted beam in elevation is relatively narrow and if the pitch is larger than the threshold, the performance reduction may be noticeable and constitute a problem.

Similarly, the radar transceiver 3 performance degrades beyond 50° azimuth, so if the radar is installed 5° off, then the performance reduction may be noticeable and constitute a problem.

Same argument applies for roll angle, the narrow transmitted beam means that are used for detection at large azimuth angles is degraded.

According to some aspects, alignment of the radar transceiver 3 is directed towards alignment of antennas 21 comprised in the radar transceiver 3, the antennas 21 being adapted to transmit radar signals and receive reflected radar signals in a well-known manner. According to some aspects, a radar transceiver 3 is an integrated unit, where an adjustment or misalignment of the radar transceiver 3 directly affects the antennas 21 comprised in the radar transceiver 3.

The reference lines L, L' may be mutually different, or equal.

## Claims

1. A method for determining the alignment of a vehicle radar transceiver (3), the alignment being defined by means of a pitch angle (ϕₚ), a yaw angle (ϕ_{y}) and a roll angle (ϕᵣ) of the radar transceiver (3) with respect to a fixed coordinate system (x, y, z), where the method comprises:
transmitting (S100) radar signals (5);
receiving (S200) reflected radar signals (6) that have been reflected by a first target object (7a) positioned at a first azimuth angle (α₁) and a first elevation angle (Φ_{A}) relative a corresponding reference line (L, L'); and
determining (S300) a first measured azimuth angle (β₁) and a first measured elevation angle (θ_{A}) to a first measured target object (7'a), corresponding to the first target object (7a), relative the corresponding reference line (L, L'); wherein the method further comprises:
receiving (S400) reflected radar signals (6) that have been reflected by a second target object (7b) positioned at a second azimuth angle (α₂) and a second elevation angle (Φ_{B}) relative the corresponding reference line (L, L'), the first azimuth angle (α₁) and the second azimuth angle (α₂) being mutually different;
determining (S500) a second measured azimuth angle (β₂) and a second measured elevation angle (θ_{B}) to a second measured target object (7'b), corresponding to the second target object (7b), relative the corresponding reference line (L, L');
estimating (S600) the pitch angle (ϕₚ), the yaw angle (ϕ_{y}) and the roll angle (ϕᵣ) of the radar transceiver (3) with respect to a fixed coordinate system (x, y, z) based on the measured angles (β₁,β₁; θ_{A}, θ_{B}) and the corresponding position angles (α₁, α₂; Φ_{A}, Φ_{B}).

2. The method according to claim 1, wherein the estimating (S600) comprises
determining (S610) expected pairs of azimuth angles and elevation angles for a set of different combinations of pitch angles (ϕₚ), yaw angles (ϕ_{y}) and roll angles (ϕᵣ) ; and
determining (S620) which combinations of pitch angles (ϕₚ), yaw angles (ϕ_{y}) and roll angles (ϕᵣ) that correspond to expected pairs of azimuth angles and elevation angles that are closest to the measured pairs of azimuth angles (β₁, β₂) and elevation angles (θ_{A}, θ_{B}).

3. The method according to claim 1, wherein the estimating (S600) comprises
creating (630) a table of the measured angles (β₁,β₁; θ_{A}, θ_{B}) and the corresponding position angles (α₁, α₂; Φ_{A}, Φ_{B}); and
using (640) maximum likelihood estimation for estimating the pitch angle (ϕₚ), the yaw angle (ϕ_{y}) and the roll angle (ϕᵣ) using the table.

4. The method according to any one of the previous claims, wherein the target objects (7a, 7b) are positioned at different vertical positions (hₐ, h_{b}) relative a ground level (G), where the first elevation angle (Φ_{A}) and the second elevation angle (Φ_{B}) are mutually different.

5. The method according to any one of the previous claims, wherein the method comprises
comparing (S700) the determined alignment of the radar transceiver (3), as defined by resulting determined pitch angle (ϕₚ), yaw angle (ϕ_{y}) and roll angle (ϕᵣ), to a specification.

6. The method according to claim 5, wherein the comparing (S700) comprises
comparing (710) the pitch angle (ϕₚ), the yaw angle (ϕ_{y}) and the roll angle (ϕᵣ) to previously defined thresholds.

7. The method according to any one of the claims 5 or 6, wherein the comparing (S700) comprises
comparing (720) a combination of the pitch angle (ϕₚ), the yaw angle (ϕ_{y}) and the roll angle (ϕᵣ) to a previously defined threshold.

8. The method according to any one of the previous claims, wherein the method comprises
updating (S800) software parameters of the radar transceiver (3) to correct for the determined alignment.

9. A measuring system (12) for determining the alignment of a vehicle radar transceiver (3), the alignment being defined by means of a pitch angle (ϕₚ) a yaw angle (ϕ_{y}) and a roll angle (ϕᵣ) of the radar transceiver (3) with respect to a fixed coordinate system (x, y, z), where the measuring system (12) comprises a radar system (2) that in turn comprises the radar transceiver (3) and a control unit (4), the measuring system (12) further comprising at least a first target object (7a) positioned at a first azimuth angle (α₁) and a first elevation angle (Φ_{A}) relative a corresponding reference line (L, L'), and a second target object (7b) positioned at a second azimuth angle (α₂) and a second elevation angle (Φ_{B}) relative the corresponding reference line (L, L'), where the measuring system (12) is adapted to:
- transmit radar signals (5),
- receive reflected radar signals (6) that have been reflected by the target objects (7a, 7b), and
- determine a first measured azimuth angle (β₁) and a first measured elevation angle (θ_{A}) to a first measured target object (7'a), corresponding to the first target object (7a), relative the corresponding reference line (L, L'),
**characterized in that** the measuring system (12) further is adapted to:
- determine a second measured azimuth angle (β₂) and a second measured elevation angle (θ_{B}) to a second measured target object (7'b), corresponding to the second target object (7b), relative the corresponding reference line (L, L'), and to
- estimate the pitch angle (ϕₚ), the yaw angle (ϕ_{y}) and the roll angle (ϕᵣ) of the radar transceiver (3) with respect to a fixed coordinate system (x, y, z) based on the measured angles (β₁,β₁; θ_{A}, θ_{B}) and the corresponding position angles (α₁, α₂; Φ_{A}, Φ_{B}).

10. The measuring system (12) according to claim 9, wherein the measuring system (12) is adapted to:
- determine expected azimuth angles for a set of different combinations of pitch angles (ϕₚ), yaw angles (ϕ_{y}) and roll angles (ϕᵣ), and to
- determine which combinations of pitch angle (ϕₚ), yaw angle (ϕ_{y}) and roll angle (ϕᵣ) that correspond to expected azimuth angles that are closest to the measured azimuth angles (β₁, β₂).

11. The measuring system (12) according to claim 9, wherein the measuring system (12) is adapted to:
create a table of the measured angles (β₁,β₁; θ_{A}, θ_{B}) and the corresponding position angles (α₁, α₂; Φ_{A}, Φ_{B}); and
use maximum likelihood estimation for estimating the pitch angle (ϕₚ), the yaw angle (ϕ_{y}) and the roll angle (ϕᵣ) using the table.

12. The measuring system (12) according to any one of the claims 9-11, wherein the measuring system (12) is adapted to compare the pitch angle (ϕₚ), the yaw angle (ϕ_{y}) and the roll angle (ϕᵣ) to previously defined thresholds.

13. The measuring system (12) according to any one of the claims 9-11, wherein the measuring system (12) is adapted to compare a combination of the pitch angle (ϕₚ), the yaw angle (ϕ_{y}) and the roll angle (ϕᵣ) to a previously defined threshold.

14. The measuring system (12) according to any one of the claims 9-13, wherein the target objects (7a, 7b) are positioned at different vertical positions (hₐ, h_{b}) relative a ground level (G), where the first target object (7a) is positioned at a first elevation angle (Φ_{A}) relative a reference line (L') and the second target object (7a) is positioned at a second elevation angle (Φ_{B}) relative the reference line (L').

15. The measuring system (12) according to any one of the claims 9-14, wherein at least one target object is a longitudinal reflector in the form of a circular pole (107a, 107b) or a 90° bent longitudinally running metal sheet (207a, 207b).
